# EUROPEAN PATENT SPECIFICATION

(11) **EP 3 009 471 B1**
(45) Date of publication and mention of the grant of the patent: **28.11.2018**
(21) Application number: 15187096.1
(22) Date of filing: 28.09.2015
(51) Int. Cl.: C08L 7/00, C08L 9/06, C08L 9/00, B60C 1/00, B29D 30/06, B29D 30/08, C08K 3/04

(54) **PREPARATION OF APEX/BEAD COMPOSITE AND TIRE WITH PRE-APEXED BEAD**
HERSTELLUNG VON APEX-/WULSTVERBUNDMATERIAL UND REIFEN MIT VORGEKEILTER WULST
PRÉPARATION DE COMPOSITES TALON/APEX ET PNEU À TALON À APEX

(30) Priority: 14.10.2014 US 201414513471
(43) Date of publication of application: 20.04.2016
(73) Proprietor: The Goodyear Tire & Rubber Company, Akron, Ohio 44316 (US)
(72) Inventor: SANDSTROM, Paul Harry, Cuyahoga Falls, OH Ohio 44223 (US); GOLDEN, James Joseph, North Canton, OH Ohio 44720 (US); LACO, Joseph Henry, Akron, OH Ohio 44310 (US)
(74) Representative: Kutsch, Bernd

(56) References cited:
- EP-A1- 1 241 219
- EP-A1- 2 607 098
- EP-A2- 1 145 832
- WO-A1-01/39964
- US-A1- 2012 259 051
- US-A1- 2012 267 026
- US-A1- 2012 296 027
- US-A1- 2013 153 099
- BRIDGESTONE: "BRIDGESTONE Aircraft Tires", , 28 August 2011 (2011-08-28), XP055233913, Retrieved from the Internet: URL:https://web.archive.org/web/2011082804 0923/http://www.bridgestone.com/products/s peciality_tires/aircraft/products/basicstr ucture/bias.html [retrieved on 2015-12-04]
- UBE America: "UBE America Inc. | Products", , 9 May 2011 (2011-05-09), pages 1-10, XP055234735, Retrieved from the Internet: URL:https://web.archive.org/web/2011050908 5549/http://www.ube.com/content.php?pageid =87 [retrieved on 2015-12-08]

## Description

### Field of the Invention

The invention relates to preparation of an apex/bead composite or assembly as a pre-apexed tire bead, and pneumatic tire containing such pre-apexed bead. The invention relates to such pre-apexed bead where the apex comprises a rubber composition which contains a syndiotactic-1,2-polybutadiene polymer.

### Background of the Invention

Pneumatic tires usually comprise a circumferential tread and spaced apart beads with a sidewall extending from the beads to the tread and a carcass supporting the tread and sidewall components. The tire sidewalls usually contain a rubber apex within the sidewall which extends from a tire bead radially outward into the tire sidewall to add stiffness to the tire sidewall to thereby promote beneficial handling characteristics to the tire.

In practice, the pneumatic tire is usually built as an assembly of components which includes individually assembling the apex and bead components together with other components to form a tire assembly which is then cured in a suitable mold to form the tire.

For this invention, it is desired to pre-form a composite of uncured apex rubber strip applied circumferentially around an annular bead of rubber encapsulated plurality of metal, or wire, cords to thereby form a pre-apexed bead. A tire is prepared by building an assembly of components including such pre-apexed bead and then curing the assembly to form the tire.

The envisioned methodology of providing a pre-apexed tire bead by preforming the composite of circumferential apex strip around an annular bead comprises extruding a shaped uncured rubber apex strip onto and circumferentially around an annular bead of uncured rubber encapsulated plurality of metal cords is considered to be a departure from past practice.

For such envisioned methodology of applying an uncured apex rubber strip onto and around the circumference of an annular bead, it is readily seen that the peripheral outer portion of the uncured rubber apex strip necessarily stretches to extend, or travel, a greater distance than the peripheral inner portion of the rubber apex strip around the annular bead. As the peripheral outer portion of the extruded uncured rubber apex is stretched to a greater length than its peripheral inner portion it has been observed that, because the stretched apex strip is elastomeric in nature, it has a natural tendency to try to shrink and thereby return to its original unstretched shape. As a result, the stretched elastomeric peripheral outer portion of the uncured apex strip tends to undesirably shrink and thereby deform and curl inward toward its peripheral inner portion.

Therefore a challenge is presented to enable such preparation of pre-formed apex/bead combination (pre-apexed bead) for which the outer portion of the apex uncured rubber strip can substantially maintain its stretched shape upon being applied onto and circumferentially around the annular tire bead component.

For such challenge, it is therefore proposed to evaluate reducing the elastomeric characteristic of the apex rubber strip by adding a thermoplastic syndiotactic-1,2-polybutadiene polymer in its rubber composition to thereby make the uncured rubber composition somewhat less elastomeric in nature to thereby allow the rubber composition, when stretched, to significantly reduce or substantially eliminate the aforesaid shrinking and curling of the outer peripheral portion of the uncured apex rubber strip.

The thermoplastic syndiotactic-1,2- polybutadiene polymer is chosen because it can be sulfur cured together with other diene-based elastomers present in the cured rubber composition with suitable elastomeric properties for the tire apex component of the tire.

Syndiotactic-1,2-polybutadiene polymer is recognized as being a crystalline thermoplastic polymer and therefore in its uncured state rather than being elastomeric. However, upon blending with various diene-based elastomers to form a rubber composition, it exhibits elastomeric rubbery properties when the rubber composition is sulfur cured.

Historically, syndiotactic polybutadiene has been proposed for use in various rubber compositions for various tire components for various purposes such as, for example, tire carcass, innerliner and apex components. For example, see US-A-5,307,850, US-B-6,156,143, US-B-6,202,726, US-B-6,539,996, US-B-6,956,093 and US-B-8,536,262.

As indicated, because the uncured apex rubber strip contains the thermoplastic syndiotactic polybutadiene, it is somewhat less elastomeric in nature.

Being less elastomeric, it is envisioned that the uncured rubber apex, particularly its outer peripheral portion, may have a reduced tendency to attempt to return to its original shape after circumferentially stretching it when being wrapped circumferentially around the annular bead and thereby less tendency to curl inward to present the aforesaid unwanted altered apex shape and to thereby beneficially enable inserting the apex/bead composite into the tire assembly for preparation of a pneumatic tire.

Therefore, it is proposed to evaluate a process of preparation of an uncured apex/bead composite for preparation of a pneumatic tire where the apex comprises an uncured rubber composition which contains a syndiotactic-1,2- polybutadiene thermoplastic polymer having a melting point in a range of from 70°C to 130°C and below a maximum mixing temperature reached (e.g. 140°C to 170°C) for mixing the rubber composition containing the syndiotactic-1,2-polybuadiene so that the thermoplastic syndiotactic-1,2- polybutadiene will readily melt into and disperse within the rubber composition as it is being mixed.

In the description of this invention, the term "phr" where used means "parts of material by weight per 100 parts by weight of rubber". The terms "rubber" and "elastomer" may be used interchangeably unless otherwise indicated. The terms "rubber composition" and "compound" may be used interchangeably unless otherwise indicated.

A polymer melting point (MP), where referenced, may be determined, for example, as minimum endotherm values from differential scanning calorimetry (DSC) curves as conventionally used and understood by those having skill in such art.

EP-A-2 607 098 describes a tire component such as a bead apex containing syndiotactic-1,2-polybutadiene. This syndiotactic-1,2-polybutadiene is used in an amount of 10 to 80 phr. The melting point of the polybutadiene is in a range of from 80°C to 200°C. The mixing temperature may be in a range of from 150°C to 180°C.

WO-A-01/39964 describes a pneumatic radial ply tire comprising an apex having an inner apex component, a middle apex component and an outer apex component. These apex components are located axially adjacent to each other but are not attached one to the other in the radial direction of the tire.

US-A-2012/0259051 describes a rubber composition for a bead apex. The rubber composition comprises in one example 6.8 phr of syndiotactic-1,2-polybutadiene having a melting point of 201°C.

US-A-2013/0153099 describes a pneumatic tire having a cap/base configuration wherein the base rubber layer of the tread contains syndiotactic polybutadiene with a diverse blend of carbon blacks.

### Summary and Practice of the Invention

The invention relates to a method in accordance with claims 1 and 7 respectively, to a pre-apexed annular tire bead in accordance with claim 9 and to a tire in accordance with claim 12.

Dependent claims refer to preferred embodiments of the invention.

In accordance with a preferred aspect of the invention, the method comprises attaching an apex extension strip circumferentially to the radially outer part of the applied uncured apex rubber strip. The method may further comprise extruding the sulfur curable uncured rubber composition of the uncured apex rubber strip through a die to form or to form and apply the apex extension strip.

In accordance with a preferred aspect of this invention, a method (process) of preparing a tire apex/bead composite as a pre-apexed bead comprises mixing a sulfur curable rubber composition and extruding the mixed uncured sulfur curable rubber composition through a suitable die to form and apply an uncured rubber apex strip onto and circumferentially around the outer peripheral surface of an annular tire bead, where said tire bead comprises uncured sulfur curable rubber encapsulated plurality of wire cords (e.g. metal cords such as for example brass coated steel cords),
whereby the radially outer portion (e.g. radially outer peripheral portion) of the uncured rubber apex strip is caused by such method to be stretched beyond its original extruded length (as the apex is applied onto and around the periphery of the annular tire bead) and beyond the length of the radially inner portion of the apex (beyond the length of the radially inner peripheral portion of the uncured rubber apex adjacent to the annular bead which retains its approximate original extruded length),
wherein the composition of the rubber apex comprises:
(A) at least one diene-based elastomer comprising at least one of cis 1,4-polyisoprene, polybutadiene (e.g. high cis 1,4- or high trans 1,4- polybutadiene) and styrene/butadiene rubber (e.g. comprising cis1,4-polyisoprene rubber and at least one of polybutadiene rubber and styrene/butadiene rubber),
(B) 3 to 7 parts by weight thermoplastic syndiotactic-1,2-polybutadiene per 100 parts by weight of the diene-based elastomer(s), wherein the thermoplastic syndiotactic-1,2-polybutadiene has a melting point (MP) in a range of from 70°C to 130°C. and
(C) 30 to 120, alternately 50 to 100 phr of reinforcing filler comprising:
   (1) rubber reinforcing carbon black, or
   (2) combination of rubber reinforcing carbon black and precipitated silica together with a coupling agent for the precipitated silica having a moiety reactive with hydroxyl groups (e.g. silanol groups) on the precipitated silica
and another different moiety interactive with said diene-based elastomer(s).

In one embodiment, the melting point (MP) of the syndiotactic-1,2-polybutadiene is at least 10°C lower than the maximum temperature reached for the mixing of the rubber composition (e.g. a maximum mixing temperature for the rubber composition in a range of from 140 to 180°C, alternately from 150 to 170°C) to enable the thermoplastic syndiotactic-1,2-polybutadiene to be melted into the rubber composition as it is being mixed. In other words, the rubber composition containing the thermoplastic syndiotactic-1,2-polybutadiene is mixed to a maximum temperature of at least 10°C higher than the melting point of the thermoplastic-1,2-polybutadiene.

Desirably the aforesaid reinforcing filler is limited to rubber reinforcing carbon black. Representative of various rubber reinforcing carbon blacks may be found, for example and not intended to be limiting, in The Vanderbilt Rubber Handbook, 13th Edition, (1990) Pages 416 through 418.

Where the reinforcing filler also contains silica such as precipitated silica, the coupling agent may comprise, for example, a bis (3-triethoxysilylpropyl) polysulfide containing an average of from 2 to 4 connecting sulfur atoms in its polysulfidic bridge or an alkoxyorganomercaptosilane. Representative examples of precipitated silica (amorphous synthetic precipitated silica created by acidification of an inorganic base treated silica such as for example sodium silicate) are, for example and not intended to be limiting, precipitated silicas from PPG Industries as Hi-Sil™ 210 and HiSil™ 243, silicas from Solvay such as, for example, Zeosil 1165™MP, and silicas from Evonic as, for example,VN2™ and VN3™.

The aforesaid method of this invention further comprises sulfur curing the prepared composite of annular tire bead containing the circumferential apex rubber strip (the pre-apexed bead).

In additional accordance with this invention a pre-apexed tire bead as a composite of an annular tire bead of rubber encapsulated plurality of wire cords with a circumferential apex rubber strip is provided, particularly as prepared by the aforesaid method as well as a sulfur cured composite thereof.

In further accordance with this invention, such method further includes building an uncured tire assembly containing the prepared uncured pre-formed apex/bead composite (pre-apexed bead) with the rubber apex extending radially outward from the tire bead into an associated tire rubber sidewall.

In additional accordance with this invention, such method further includes sulfur curing the tire assembly to form a pneumatic rubber tire (containing the pre-apexed bead).

In additional accordance with this invention, a pneumatic tire is provided as being prepared by such process.

In further accordance with a preferred aspect of this invention, a pre-apexed annular tire bead (for a pneumatic rubber tire) is provided which comprises an annular tire bead comprising uncured rubber encapsulated wire cords where said bead contains a uncured rubber apex positioned onto and circumferentially around the outer periphery (the outer surface) of the annular bead,
wherein the radially outer portion of the uncured rubber apex on the annular bead has a stretched length greater than the length of its radially inner portion,
wherein the composition of the rubber apex comprises:
(A) at least one diene-based elastomer comprising at least one of cis 1,4-polyisoprene, polybutadiene and styrene/butadiene rubber (e.g. cis 1,4-polyisoprene rubber and at least one of polybutadiene rubber and styrene/butadiene rubber),
(B) from 3 to 7 parts by weight thermoplastic syndiotactic-1,2-polybutadiene per 100 parts by weight of the diene-based elastomer(s), wherein the thermoplastic syndiotactic-1,2-polybutadiene has a melting point (MP) in a range of from 70°C to 130°C. and
(C) 30 to 120, alternately 50 to 100 phr of reinforcing filler comprising:
   (1) rubber reinforcing carbon black, or
   (2) combination of rubber reinforcing carbon black and precipitated silica together with a coupling agent for the precipitated silica having a moiety reactive with hydroxyl groups on the precipitated silica and another different moiety interactive with said diene-based elastomer(s).

In one embodiment, the reinforcing filler for the rubber apex is limited to rubber reinforcing carbon black.

In a further embodiment, the reinforcing filler for the rubber apex is a combination of rubber reinforcing carbon black and precipitated silica together with a coupling agent for the precipitated silica comprised of a bis (3-triethoxysilylpropyl) polysulfide containing an average of from 2 to 4 connecting sulfur atoms in its polysulfidic bridge or an alkoxyorganomercaptosilane.

In further accordance with this invention, pre-apexed tire bead is a sulfur cured pre-apexed tire bead.

In additional accordance with this invention a pneumatic tire is provided which contains the pre-apexed tire bead where the apex extends radially outward from the tire bead into an associated tire rubber sidewall (e.g. a tire rubber sidewall extending from a tire bead radially outward to a tire tread).

In further accordance with this invention, a pneumatic tire is provided as a sulfur cured pneumatic rubber tire.

The following drawings are provided to further understand the invention.

### Brief Description of Drawings

Figure 1 is a cross-sectional view of a pneumatic tire illustrating apex/bead assembly placements.
Figure 2 is a perspective view of a pneumatic tire illustrating apex/bead assembly placements.
Figure 3 is a perspective view illustrating a process of extrusion of a rubber apex circumferentially around and onto an annular tire bead.
Figures 4A, 4B, 4C and 4D are individual cross sectional views of an apex and tire bead.

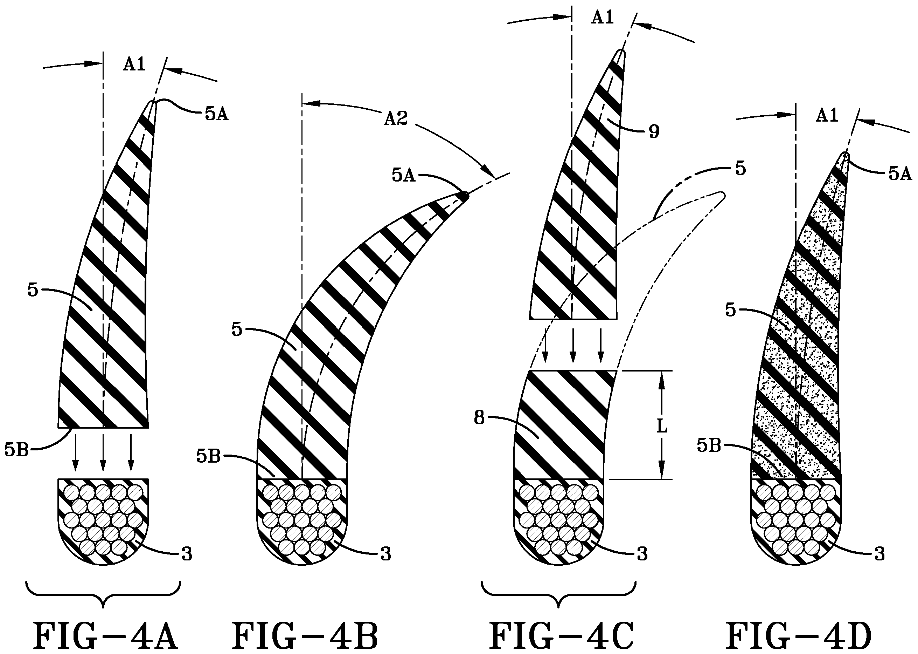

### Additional Descriptions of Figures 4A, 4B, 4C and 4D

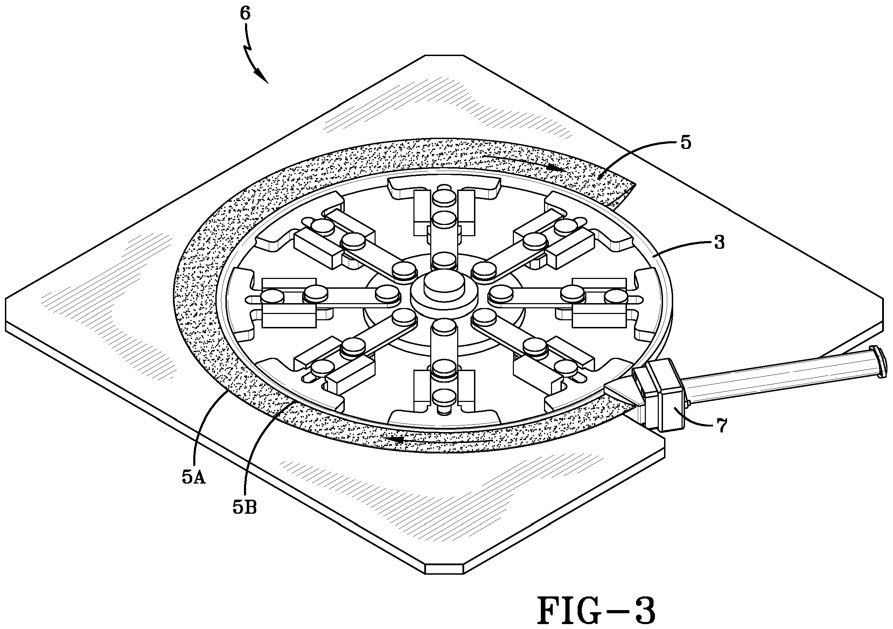

Figure 4A illustrates a bead of rubber encapsulated metal cords to which a shaped uncured rubber apex is to be combined to form a composite thereof by the process illustrated in Figure 3.

Figure 4B illustrates a composite of uncured rubber apex and bead prepared by a process illustrated in Figure 3 in which the outer portion of the shaped apex is deformed by the process of preparation in which the outer portion of the apex is stretched by the aforesaid process.

Figure 4C illustrates the composite of Figure 4B having been truncated by not including the aforesaid outer portion of the apex with the deleted outer portion being phantom outlined.

Figure 4D illustrates a composite of uncured rubber apex and tire bead (pre-apexed tire bead) prepared by a process illustrated in Figure 3 in which the outer portion of the applied apex is not deformed by such process in which the rubber composition of the rubber apex contains a syndiotactic-1,2-polybutadiene.

### The Drawings

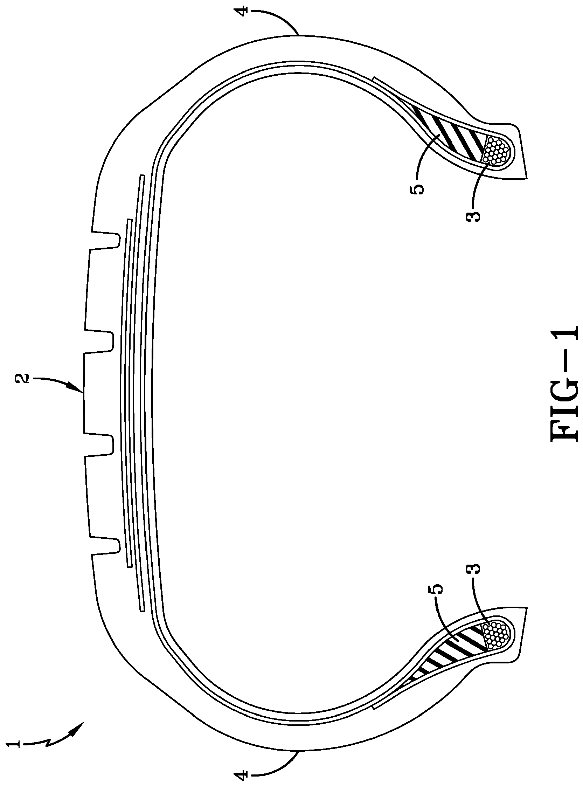

In Figure 1, a cross sectional view of a pneumatic tire 1 is shown which comprises a tread 2, a tire bead 3 comprising rubber encapsulated metal cords, a rubber sidewall 4 extending from the bead portion 3 to the tread 2 of the tire 1 and a cured rubber apex 5 extending radially outward from the bead 3 into the sidewall 4 wherein the combination of bead 3 and apex 5 represent an apex/bead assembly.

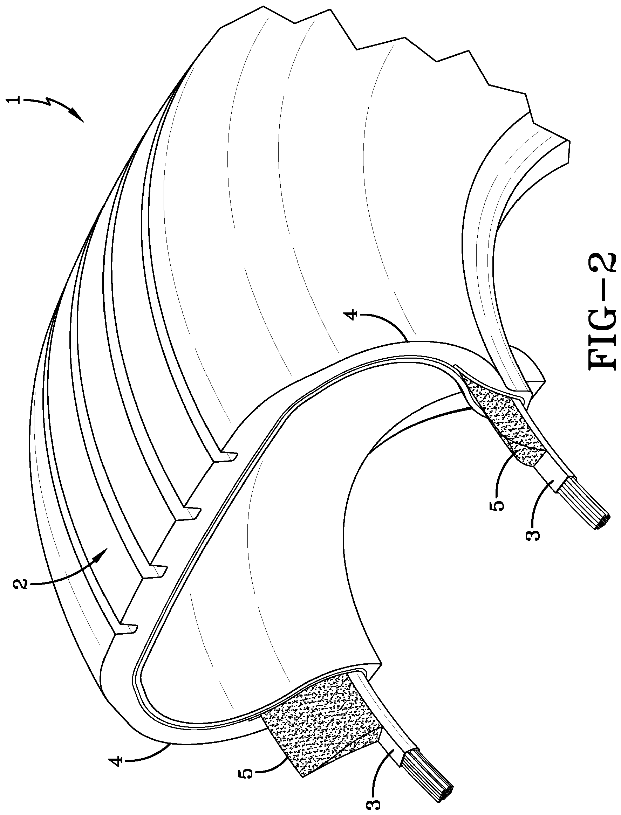

In Figure 2, a perspective view of a pneumatic tire 1 is shown which comprises a tread 2, a tire bead 3 comprising rubber encapsulated metal cords, a rubber sidewall 4 extending from the bead portion 3 to the tread 2 of the tire 1 and a cured rubber apex 5 extending radially outward from the bead 3 into the sidewall 4 wherein the combination of bead 3 and apex 5 represent an apex/bead assembly.

In Figure 3, a rotatable wheel 6 is shown to illustrate a process in which an annular tire bead 3 of rubber encapsulated wire cords is fitted to its periphery and to which an extruder 7 is shown as applying an extruded and shaped rubber apex 5 of an uncured rubber composition onto and circumferentially around the fitted bead 3. The applied apex has a radial outer portion 5A which is thereby stretched beyond its original extruded shape as it is wound around the fitted bead 3 and a radial inner portion 5B, which does not become significantly stretched, if it is stretched at all and at least not to the extent that its radial outer portion is stretched, to form a pre-apexed tire bead.

In Figure 4A a cross section of an annular bead 3 of rubber encapsulated wire cords is shown to which an extruded rubber apex 5 of an uncured rubber composition composed of diene-based elastomers having its outer portion 5A being extrusion-shaped to deviate from its inner portion 5B by an angle of A1. The rubber apex 5 is to be applied to the annular bead 3 by the process illustrated in Figure 3.

In Figure 4B, a cross section of an annular bead 3 of rubber encapsulated wire cords is shown to which an extruded, shaped rubber apex 5 of an uncured rubber composition composed diene-based elastomers, having an outer portion 5A and inner portion 5B, has been applied onto and circumferentially around the annular bead 3 by a process illustrated in Figure 3. In Figure 4B the stretched outer portion 5A of the apex 5 is shown as being visibly deformed by curling inward in a direction toward its inner portion 5B caused by the stretched outer apex rubber portion 5A attempting to return to its original unstretched condition after application by the process illustrated in Figure 3. The extent of curled angular deformation A2 of the apex 5 is significantly greater than the original angle A1 and therefore presents a shape considered to be unsatisfactory for use in building the tire illustrated in Figure 1 and Figure 2.

In Figure 4C, an alternative assembly is illustrated in which a truncated, or shortened, uncured rubber apex 8 composed of a diene-elastomer rubber composition is applied onto and circumferentially around an annular bead 3 by the process illustrated in Figure 3 for which the amount of curled deformation of the shortened apex 8 caused by its stretching is comparatively minimized because of its shortened height. Then, to complete the apex, an apex extension 9 is later built onto the shortened apex 8 during the tire building process instead by the process illustrated in Figure 3.

In Figure 4D, a cross section of an annular bead 3 of rubber encapsulated wire cords is shown to which an extruded, shaped rubber apex 5 of an uncured rubber composition containing diene-based elastomers which also contains a thermoplastic syndiotactic-1,2-polybutadene polymer is applied by the process illustrated in Figure 3 to form a pre-apexed tire bead. In Figure 4D it is seen that the portion 5A of the applied rubber apex 5 has the same angular inclination (declination) A1 as in Figure 4A and therefore does not present a curled deformation and is therefore satisfactory for building the apex/bead composite (pre-apexed tire bead) into a tire assembly to form a tire containing such pre-apexed bead.

In practice, the syndiotactic polybutadiene (SPBD) might be prepared, for example, in an inert organic solvent such as, for example, utilizing a procedure described in US-A-3,901,868 or in an aqueous medium utilizing a process described in US-A-4,506,031.

As indicated, the syndiotactic-1,2-polybutadiene purposefully has a melting point in a range from 70°C to 130°C so that it will adequately melt into the uncured rubber composition as it is being mixed to a temperature, for example, of from 150°C to 170°C. Such mixing is usually carried out in an internal rubber mixer.

In one embodiment, the styrene/butadiene rubber (solution or emulsion polymerization derived) for the rubber composition of the apex may be functionalized by containing functional groups reactive with hydroxyl groups contained on the precipitated silica. Such functional groups may be, for example, at least one of amine, siloxy and thiol groups.

In one embodiment, the functionalized styrene/butadiene rubber may be tin coupled.

Other conventional compounding ingredients may also, of course, be included in the rubber composition including, for example, zinc oxide, zinc stearate, various processing aids as well as sulfur or sulfur containing compounds together with one or more sulfur cure accelerators.

The following Examples are provided to illustrate the invention . Unless otherwise indicated, parts and percentages are by weight.

### EXAMPLE I

Rubber samples were prepared to evaluate use of various syndiotactic-1,2-polybutadienes in rubber compositions intended for use as tire apex strip. The basic rubber composition (amounts rounded) for this Example is reported in the following Table 1 with parts and percentages, where appropriate, by weight unless otherwise indicated.

**Table 1**

| Compound | Parts (phr) |
|---|---|
| Non-Productive Mixing (NP) | |
| Natural cis 1,4-polyisoprene rubber | 60 |
| Emulsion SBR¹ | 40 or 35 |
| Syndiotactic-1,2-polybutadiene (reported in this Table as a rubber)² | 0 or 5 |
| Rubber reinforcing carbon black (N326)³ | 87 |
| Zinc oxide | 3 |
| Fatty acid⁴ | 1 |
| Rubber processing oil | 6 |
| Reinforcing resin (product of methylene donor and acceptor compounds) | 10 |
| | |

| Productive Mixing (P) | |
|---|---|
| Sulfur | 4 |
| Sulfur cure accelerator(s)⁵ | 2.8 |
| Sulfur cure retarder6 | 0.3 |

| | |
|---|---|
| ¹Styrene/butadiene elastomer prepared by aqueous emulsion polymerization containing about 23.5 percent bound styrene, 50 Mooney viscosity, as PLF1502™ from The Goodyear Tire & Rubber Company ²Syndiotactic-1,2-polybutadiene having melting points of 71, 95, 105 and 126°C, respectively. For this Table, it is conveniently being reported as part of the rubber since the polymer eventually cures in the rubber composition to form a rubbery polymer (elastomer). ³Rubber reinforcing carbon black as N326, an ASTM designation ⁴Fatty acid comprised primarily of stearic, palmitic and oleic acids ⁵Sulfur cure accelerator as a sulfenamide ⁶Sulfur cure retarder as N-Cyclohexylthiophthalimide | |

For this evaluation, rubber Samples A through E were evaluated.

Control rubber Sample A was prepared with its elastomer components being a combination of natural rubber and emulsion SBR rubber without the syndiotactic-1,2-polybutadiene polymer.

Experimental rubber Samples B through E were prepared comprised of their elastomer components being a combination of natural rubber and emulsion SBR together with syndiotactic polybutadiene polymers of varying melting points.

The rubber compositions were prepared by blending the ingredients in an internal rubber mixer in a series of sequential mixing steps while sheeting out the rubber mixtures and cooling to a temperature below 40°C between mixing steps. The sequential mixing steps were comprised of a non-productive mixing step(s) with a drop temperature of 160°C (temperature of removal of the rubber from the internal rubber mixer), (NP), followed by a productive mixing step (P) with a drop temperature of 110°C, (in which sulfur and sulfur cure accelerators and retarder were added).

### Curl Test

A curl test is provided to evaluate a tendency for an outer portion of an uncured rubber strip to curl inwardly as it is bent to an open ended circular (annular) configuration (shape).

For the curl test, a strip of uncured rubber composition is provided as an extrusion of uncured rubber through a Garvey die head. Such strip Garvey extrudate has a cross-sectional, somewhat triangular shaped configuration comprised of a base portion and apex portion, somewhat similar to the shape illustrated in Figure 4A. The length of the strip of Garvey extrudate can be, for example, 10 cm.

The strip of Garvey extrudate is bent to form an open ended ring of a circular configuration with its base portion constituting the inner portion of the ring and its apex portion constituting the peripheral outer portion of the ring.

The circular configuration of the strip of Garvey extrudate may be formed manually or be formed by wrapping the strip around a suitable mandrel (e.g. cylindrical or circular shaped mandrel).

The peripheral outer portion of the formed ring of the strip of Garvey extrudate is thereby stretched beyond the length of its original extruded form and beyond the length of its radially inner portion.

A visual observation is made of the stretched outer peripheral portion of the rubber strip of Garvey extrudate in its circular form to evaluate its tendency to curl inward toward the radially inner portion of the circular configured strip. A rating of from 1 to 10 is provided for the degree of observed curl of the outer peripheral portion toward its radially inner portion. A rating of 10 is provided for an observed no curl deformation of the strip and a rating of 1 is provided for an observed severe curl deformation of the strip.

The following Table 2 reports cure behavior and various physical properties of rubber Samples A through E based upon the formulation of Table 1 as well as a curl rating for the uncured, extruded, rubber Samples A through E. The rubber samples were sulfur cured, where appropriate, for 11 minutes at 170°C.

**Table 2**

| | Parts (phr) | | | | |
|---|---|---|---|---|---|
| | Control | Exp'l Rubber Samples | | | |
| Elastomers | A | B | C | D | E |
| Natural cis 1,4-polyisoprene rubber | 60 | 60 | 60 | 60 | 60 |
| Emulsion SBR | 40 | 35 | 35 | 35 | 35 |
| SPBD polymer, (melting point, °C) | NA | 71 | 95 | 105 | 126 |
| | | | | | |

| Properties | | | | | |
|---|---|---|---|---|---|
| Stress Strain (11 minutes at 170°C)¹ | | | | | |
| Tensile strength (MPa) | 14.3 | 13.2 | 12.8 | 13.5 | 13.3 |
| Elongation at break (%) | 159 | 143 | 132 | 143 | 142 |
| Modulus 100% (MPa) | 10.2 | 10.4 | 10.6 | 10.6 | 10.6 |
| Rebound, Zwick (%) 100°C | 45 | 44 | 47 | 44 | 45 |
| | | | | | |

| RPA, 100°C, 1 Hertz⁶ | | | | | |
|---|---|---|---|---|---|
| Storage modulus (G'), 1% strain (MPa) | 25.6 | 25.1 | 21.8 | 24.6 | 27 |
| Storage modulus (G'), 10% strain (MPa) | 8.4 | 7.2 | 7.2 | 7 | 7.5 |
| Apex curling laboratory test (Rating on a scale of from 1 to 10) | 4 | 9 | 9 | 8 | 8 |

| | | | | | |
|---|---|---|---|---|---|
| ¹Data by Instron Testing System instrument of the Instron Corporation ²Rubber Processing Analysis test | | | | | |

From Table 2 it is observed that the replacement of 5 phr of the emulsion SBR with 5 phr of various melting point SPBDs had only a small effect on the cured properties shown in this table.

An important feature of the SPBD addition for this Example is the observed resistance of the rubber sample of the uncured rubber apex composition to curl when submitted to the curl test. This is considered to be predictive of resistance of an uncured rubber apex composite to curl upon being applied onto and circumferentially about an annular tire bead to create an apex/bead composite in a form of a pre-apexed bead.

In this example, a curl value of 9 was observed for rubber Samples B and C which contained 5 parts by weight per 100 parts by weight rubber of syndiotactic-1,2-polybutadienes having melting points of 71°C and 95°C, respectively which represents an observed acceptable very little curl as compared to an unacceptable excessive curl value of 4 for the rubber composition of control rubber Sample A without the syndiotactic polybutadiene addition.

In this example, a curl value of 8 was observed for rubber Samples D and E which contained 5 parts by weight per 100 parts by weight rubber of syndiotactic-1,2-polybutadienes having melting points of 105°C and 126°C, respectively which represents an observed usually acceptable very little curl as compared to an unacceptable excessive curl value of 4 for the rubber composition of Control rubber Sample A without the syndiotactic polybutadiene addition.

Control rubber Sample A which did not contain syndiotactic polybutadiene with a laboratory curl test value of 4. Such rubber sample would not be recommended for use as a pre-apexed annular tire bead created by extruding an uncured rubber apex onto and circumferentially around an annular tire bead. In general, it is considered that such apex rubber composition presenting a curl value of less than 7 would considered as being unsatisfactory for such pre-apexed bead preparation process.

Accordingly, it is observed that the rubber compositions of rubber Samples B through E presented sufficiently minimal curl data which is predictive of acceptable performance in a tire building process that first produces a pre-apexed tire bead comprised of extruding an uncured rubber apex onto and circumferentially around an annular tire bead in a tire building process.

### EXAMPLE II

With the positive curl results obtained in Example I, samples of rubber compositions were prepared to evaluate use of various levels of a syndiotactic-1,2-polybutadiene having a melting point of 71°C in rubber compositions as being indicative of a tire apex strip.

The basic rubber composition (amounts rounded) for this Example is reported in the following Table 3 with parts and percentages, where appropriate, by weight unless otherwise indicated.

**Table 3**

| Compound | Parts (phr) |
|---|---|
| Non-Productive Mixing (NP) | |
| Natural cis 1,4-polyisoprene rubber | 60 |
| Emulsion SBR¹ | 40 or 33 |
| Syndiotactic-1,2-polybutadiene rubber (reported as part of the rubber) | ² 3 to 7 |
| Rubber reinforcing carbon black (N326)³ | 87 |
| Zinc Oxide | 3 |
| Fatty acid⁴ | 1 |
| Rubber processing oil | 6 |
| Reinforcing resin (product of methylene donor and acceptor compounds) | 10 |
| | |

| Productive Mixing (P) | |
|---|---|
| Sulfur | 4 |
| Sulfur cure accelerator(s)⁵ | 2.8 |
| Sulfur cure retarder⁶ | 0.3 |

| | |
|---|---|
| ¹Styrene/butadiene elastomer prepared by aqueous emulsion polymerization containing about 23.5 percent bound styrene, 50 Mooney viscosity, as PLF1502™ from The Goodyear Tire & Rubber Company ²Syndiotactic-1,2-polybutadiene having melting point of 71°C, conveniently reported in the Table as part of the rubber since the polymer cures in the rubber formulation to form a rubbery polymer (elastomer) ³Rubber reinforcing carbon black as N326, an ASTM designation ⁴Fatty acid comprised primarily of stearic, palmitic and oleic acids ⁵Sulfur cure accelerator as a sulfenamide ⁶Sulfur cure retarder as N-Cyclohexylthiophthalimide | |

For this evaluation, rubber Samples F through I were evaluated.

Control rubber Sample F was prepared with its elastomer components being a combination of natural rubber and emulsion SBR rubber without the syndiotactic-1,2-polybutadiene polymer.

Experimental rubber Samples G through I were prepared comprised of their elastomer components being a combination of natural rubber and emulsion SBR together with various levels of syndiotactic polybutadiene polymer having a melting point of 71°C.

The rubber compositions were prepared by blending the ingredients in an internal rubber mixer in a series of sequential mixing steps while sheeting out the rubber mixtures and cooling to a temperature below 40°C between mixing steps. The sequential mixing steps were comprised of a non-productive mixing step(s) with a drop temperature of 160°C (temperature of removal of the rubber from the internal rubber mixer), (NP), followed by a productive mixing step (P) with a drop temperature of 110°C, (in which sulfur and sulfur cure accelerators and retarder were added).

Such sequential mixing steps are well known to those having skill in such art.

The following Table 4 reports cure behavior and various physical properties of rubber Samples F through I based upon the formulation of Table 1 as well as a curl rating for the uncured, extruded, rubber Samples F through I. The rubber samples were sulfur cured, where appropriate, for 11 minutes at 170°C.

**Table 4**

| | Parts (phr) | | | |
|---|---|---|---|---|
| | Control | Exp'l Rubber Samples | | |
| Elastomers | F | G | H | I |
| Natural cis 1,4-polyisoprene rubber | 60 | 60 | 60 | 60 |
| Emulsion SBR | 40 | 37 | 35 | 33 |
| SPBD polymer, parts by weight (MP = 71°C) | NA | 3 | 5 | 7 |
| | | | | |

| Properties | | | | |
|---|---|---|---|---|
| Stress Strain (11 minutes at 170°C)¹ | | | | |
| Tensile strength (MPa) | 14.9 | 14.9 | 15.4 | 15.3 |
| Elongation at break (%) | 165 | 161 | 174 | 163 |
| Modulus 100% (MPa) | 10.2 | 10.5 | 10.4 | 10.4 |
| Rebound, Zwick (%) 100°C | 46 | 45 | 46 | 46 |
| | | | | |

| RPA, 100°C. 1 Hertz⁶ | | | | |
|---|---|---|---|---|
| Storage modulus (G'), 1% strain (MPa) | 25.3 | 26.2 | 25.3 | 21 |
| Storage modulus (G'), 10% strain (MPa) | 7.3 | 6.8 | 7 | 6.7 |
| | | | | |
| Apex curling laboratory test (Rating from 1 to 10) | 4 | 9 | 8 | 10 |

| | | | | |
|---|---|---|---|---|
| ¹Data by Instron Testing System instrument of the Instron Corporation ²Rubber Processing Analysis test | | | | |

From Table 4 it is observed that the replacement of 3 to 7 parts by weight of the emulsion SBR with the SPBD having a melting point of about 71°C had minimal effect of on the cured properties shown in this table.

An important feature of the SPBD addition for this Example is the observed resistance of uncured rubber apex composition to curl when submitted to the curl test. This is considered to be predictive of resistance of an uncured rubber apex composite to curl upon being applied onto and circumferentially about an annular tire bead to create an apex/bead composite in a form of a pre-apexed bead.

In this example, curl values of 8 to 10 were observed for rubber Sam7ples G, H and I which contained 3, 5 and 7 parts, respectively of the SPBD for which an observed acceptable very little, if any, curl was observed. An unacceptable excessive curl value of 4 was observed for the rubber composition of Control rubber Sample F without the syndiotactic polybutadiene addition.

In this example, a curl value of 10 by this test was observed for rubber Sample I which contained 7 parts by weight per 100 parts by weight rubber of syndiotactic-1,2-polybutadiene having a melting point of 71°C. This value of 10 represents no observed curling of the uncured rubber Sample. This result indicates an acceptable upper level of the SPBD for obtaining an acceptable little or no curl by this test, particularly where the SPBD has a melting point below the mixing temperature reached for the uncured rubber composition to enable the SPBD to melt into the rubber composition as it is being mixed and particularly predictive for preparation of a pre-apexed tire bead and a tire containing such pre-apexed bead.

## Claims

1. A method of preparing a pre-formed apex/bead assembly in the form of a pre-apexed bead, the method comprising:
mixing a sulfur curable uncured rubber composition with a maximum mixing temperature in a range of from 140 to 180°C;
extruding the sulfur curable uncured rubber composition through a die to form and apply an uncured apex rubber strip (5 - Figure 4D) onto and circumferentially around the outer periphery of an annular bead (3) whereby a peripheral outer portion of the uncured apex rubber strip (5 - Figure 4D) stretches to extend or travel a greater distance than the peripheral inner portion of the uncured apex rubber strip (5 - Figure 4D) around the annular bead (3), the annular bead (3) comprising an uncured rubber encapsulated plurality of wire cords;
wherein the rubber composition of the uncured apex rubber strip (5 - Figure 4D) comprises:
(A) at least one diene-based elastomer comprising at least one of cis 1,4-polyisoprene, polybutadiene and styrene/butadiene rubber;
(B) from 3 to 7 parts by weight syndiotactic-1,2-polybutadiene per 100 parts by weight of the elastomer(s), wherein the syndiotactic-1,2-polybutadiene has a melting point (MP) in a range of from 70°C to 130°C and at least 10°C below the maximum mixing temperature for the preparation of the sulfur curable uncured rubber composition; and
(C) from 30 to 120 phr of a reinforcing filler comprising:
(1) a carbon black, or
(2) a combination of a carbon black and silica together with a coupling agent for the silica having a moiety reactive with hydroxyl groups on the silica and another different moiety interactive with said diene-based elastomer(s).

2. The method of claim 1 wherein an outer peripheral portion of the uncured apex rubber strip (5 - Figure 4D) is caused to be stretched beyond its original extruded length and beyond the length of a radially inner portion of the uncured rubber apex strip (5 - Figure 4D) adjacent to the annular bead (3).

3. The method of at least one of the previous claims wherein the reinforcing filler is a rubber reinforcing carbon black.

4. The method of at least one of the previous claims wherein the reinforcing filler is a combination of a rubber reinforcing carbon black and silica or precipitated silica, together with a coupling agent for the silica comprising a bis (3-triethoxysilylpropyl) polysulfide containing an average of from 2 to 4 connecting sulfur atoms in its polysulfidic bridge or an alkoxyorganomercaptosilane.

5. The method of at least one of the previous claims wherein the diene-based elastomers comprise cis 1,4-polyisoprene and at least one of styrene/butadiene rubber and polybutadiene rubber.

6. The method of at least one of the previous claims further comprising sulfur curing the apex/bead assembly containing the circumferential apex rubber strip.

7. A method of building a tire, the method comprising building an uncured tire assembly containing the prepared uncured pre-formed apex/bead assembly in accordance with at least one of the claims 1 to 5 with the rubber apex extending radially outward from the tire bead into an associated tire sidewall.

8. The method of claim 7 further comprising sulfur curing the tire.

9. A pre-apexed annular tire bead comprising an annular tire bead (3) comprising uncured rubber encapsulated wire cords wherein the bead (3) contains a uncured rubber apex (5 - Figure 4D) positioned circumferentially around and onto the outer periphery of the annular bead (3), wherein the radially outer portion of the uncured rubber apex (5 - Figure 4D) on the annular bead (3) has a length stretched beyond the length of its radially inner portion, and wherein the composition of the rubber apex comprises:
(A) at least one diene-based elastomer comprising at least one of cis 1,4-polyisoprene, polybutadiene and styrene/butadiene rubber,
(B) from 3 to 7 parts by weight syndiotactic-1,2-polybutadiene per 100 parts by weight of the elastomer(s), wherein the syndiotactic-1,2-polybutadiene has a melting point (MP) in a range of from 70°C to 130°C and
(C) from 30 to 120 phr of a reinforcing filler comprising:
(1) a carbon black, or
(2) a combination of a carbon black and a silica together with a coupling agent for the silica having a moiety reactive with hydroxyl groups on the silica and another different moiety interactive with said diene-based elastomer(s).

10. The pre-apexed tire bead of claim 9 wherein the reinforcing filler is a rubber reinforcing carbon black or wherein the reinforcing filler is a combination of a rubber reinforcing carbon black and precipitated silica together with a coupling agent for the precipitated silica comprises a bis (3-triethoxysilylpropyl) polysulfide containing an average of from 2 to 4 connecting sulfur atoms in its polysulfidic bridge or an alkoxyorganomercaptosilane.

11. The pre-apexed annular tire bead of any of the claims 9 to 10 in the form of a sulfur cured pre-apexed tire bead.

12. A pneumatic tire comprising the pre-apexed tire bead in accordance with at least one of the claims 9 to 11 wherein the apex (5 - Figure 4D) extends radially outward from the tire bead (3) into an associated tire sidewall.

## Patentansprüche

1. Verfahren zur Herstellung einer vorgeformten Kernprofil-/Wulstanordnung in Form eines vorab mit einem Kernprofil versehenen Wulsts, wobei das Verfahren umfasst:
Mischen einer schwefelvulkanisierbaren unvulkanisierten Kautschukzusammensetzung mit einer maximalen Mischtemperatur im Bereich von 140 bis 180°C; und
Extrudieren der schwefelvulkanisierbaren unvulkanisierten Kautschukzusammensetzung durch ein Werkzeug zur Bildung und Anbringung eines unvulkanisierten Kernprofil-Kautschukstreifens (5-Figur 4D) auf, und in Umfangsrichtung um, den Außenumfang eines ringförmigen Wulsts (3), wobei ein äußerer Umfangsteil des unvulkanisierten Kernprofil-Kautschukstreifens (5 - Figur 4D) sich reckt, um sich über einen größeren Abstand als der innere Umfangsteil des unvulkanisierten Kernprofil-Kautschukstreifens (5 - Figur 4D) um den ringförmigen Wulst (3) zu erstrecken oder zu verlaufen, wobei der ringförmige Wulst (3) eine mit unvulkanisiertem Kautschuk eingekapselte Vielzahl von Drahtkorden umfasst;
wobei die Kautschukzusammensetzung des unvulkanisierten Kernprofil-Kautschukstreifens (5 - Figur 4D) umfasst:
(A) mindestens ein dienbasiertes Elastomer, umfassend mindestens eines von cis-1,4-Polyisopren, Polybutadien und Styrol-Butadien-Kautschuk;
(B) 3 bis 7 Gewichtsteile thermoplastisches syndiotaktisches 1,2-Polybutadien je 100 Gewichtsteile des Elastomers bzw. der Elastomere, wobei das syndiotaktische 1,2-Polybutadien einen Schmelzpunt (MP) im Bereich von 70°C bis 130°C und mindestens 10°C unter der maximalen Mischtemperatur zur Herstellung der schwefelvulkanisierbaren unvulkanisierten Kautschukzusammensetzung aufweist; und
(C) 30 bis 120 phr eines Verstärkungsfüllstoffs, umfassend:
(1) ein Carbon Black, oder
(2) eine Kombination eines Carbon Blacks und Silika zusammen mit einem Haftvermittler für das Silika, der einen mit Hydroxylgruppen an dem Silika reaktiven Anteil und einen anderen, verschiedenen Anteil, der mit dem bzw. den dienbasierten Elastomer(en) in Wechselwirkung tritt, aufweist.

2. Verfahren nach Anspruch 1, wobei ein äußerer Umfangsteil des unvulkanisierten Kernprofil-Kautschukstreifens (5 - Figur 4D) veranlasst wird, über seine ursprüngliche extrudierte Länge hinaus und über die Länge eines radial inneren Teils des unvulkanisierten Kernprofil-Kautschukstreifens (5 - Figur 4D) hinaus, benachbart zu dem ringförmigen Wulst (3), gereckt zu werden.

3. Verfahren nach mindestens einem der vorhergehenden Ansprüche, wobei der Verstärkungsfüllstoff ein Kautschukverstärkungs-Carbon Black ist.

4. Verfahren nach mindestens einem der vorhergehenden Ansprüche, wobei der Verstärkungsfüllstoff eine Kombination eines Kautschukverstärkungs-Carbon Blacks und Silika oder ausgefällten Silikas ist, zusammen mit einem Haftvermittler für das Silika, umfassend ein Bis(3-triethoxysilylpropyl)polysulfid, das einen Durchschnitt von 2 bis 4 verbindenden Schwefelatomen in seiner Polysulfidbrücke enthält, oder ein Alkoxyorganomercaptosilan.

5. Verfahren nach mindestens einem der vorhergehenden Ansprüche, wobei die dienbasierten Elastomere cis-1,4-Polyisopren und mindestens eines von Styrol-Butadien-Kautschuk und Polybutadienkautschuk umfassen.

6. Verfahren nach mindestens einem der vorhergehenden Ansprüche, weiter das Schwefelvulkanisieren der Kernprofil-/Wulstanordnung, die den umfangsgerichteten Kernprofil-Kautschukstreifen enthält, umfassend.

7. Verfahren zum Aufbauen eines Reifens, wobei das Verfahren das Aufbauen einer unvulkanisierten Reifenanordnung umfasst, die die hergestellte unvulkanisierte vorgeformte Kernprofil-/Wulstanordnung gemäß mindestens einem der Ansprüche 1 bis 5 enthält, wobei das Kautschuk-Kernprofil sich radial auswärts von dem Reifenwulst in eine zugehörige Reifenseitenwand erstreckt.

8. Verfahren nach Anspruch 7, weiter das Schwefelvulkanisieren des Reifens umfassend.

9. Vorab mit einem Kernprofil versehener ringförmiger Reifenwulst, umfassend einen ringförmigen Reifenwulst (3), umfassend mit unvulkanisiertem Kautschuk eingekapselte Drahtkorde, wobei der Wulst (3) ein unvulkanisiertes Kautschuk-Kernprofil (5 - Figur 4D) enthält, das in Umfangsrichtung um und auf dem Außenumfang des ringförmigen Wulsts (3) angeordnet ist, wobei der radial äußere Teil des unvulkanisierten Kautschuk-Kernprofils (5 - Figur 4D) an dem ringförmigen Wulst (3) eine Länge aufweist, die über die Länge seines radial inneren Teils hinaus gereckt ist, und wobei die Zusammensetzung des Kautschuk-Kernprofils umfasst:
(A) mindestens ein dienbasiertes Elastomer, umfassend mindestens eines von cis-1,4-Polyisopren, Polybutadien und Styrol-Butadien-Kautschuk,
(B) 3 bis 7 Gewichtsteile syndiotaktisches 1,2-Polybutadien je 100 Gewichtsteile des Elastomers bzw. der Elastomere, wobei das syndiotaktische 1,2-Polybutadien einen Schmelzpunt (MP) im Bereich von 70°C bis 130°C aufweist, und
(C) 30 bis 120 phr eines Verstärkungsfüllstoffs, umfassend:
(1) ein Carbon Black, oder
(2) eine Kombination eines Carbon Blacks und eines Silikas zusammen mit einem Haftvermittler für das Silika, der einen mit Hydroxylgruppen an dem Silika reaktiven Anteil und einen anderen, verschiedenen Anteil, der mit dem bzw. den dienbasierten Elastomer(en) in Wechselwirkung tritt, aufweist.

10. Vorab mit einem Kernprofil versehener Reifenwulst nach Anspruch 9, wobei der Verstärkungsfüllstoff ein Kautschukverstärkungs-Carbon Black ist, oder wobei der Verstärkungsfüllstoff eine Kombination eines Kautschukverstärkungs-Carbon Blacks und ausgefällten Silikas ist, zusammen mit einem Haftvermittler für das ausgefällte Silika, umfassend ein Bis(3-triethoxysilylpropyl)polysulfid, das einen Durchschnitt von 2 bis 4 verbindenden Schwefelatomen in seiner Polysulfidbrücke enthält, oder ein Alkoxyorganomercaptosilan.

11. Vorab mit einem Kernprofil versehener ringförmiger Reifenwulst nach einem der Ansprüche 9 bis 10 in Form eines schwefelvulkanisierten, vorab mit einem Kernprofil versehenen Reifenwulsts.

12. Luftreifen, umfassend den vorab mit einem Kernprofil versehenen Reifenwulst gemäß mindestens einem der Ansprüche 9 bis 11, wobei das Kernprofil (5 - Figur 4D) sich radial auswärts von dem Reifenwulst (3) in eine zugehörige Reifenseitenwand erstreckt.

## Revendications

1. Procédé de préparation d'un assemblage préformé de bourrage sur tringle/talon sous la forme d'un talon déjà muni d'un bourrage sur tringle, le procédé comprenant le fait de :
malaxer une composition de caoutchouc non vulcanisée vulcanisable au soufre avec une température de malaxage maximale dans la plage de 140 à 180 °C ;
extruder la composition de caoutchouc non vulcanisée vulcanisable au soufre à travers une filière pour former et appliquer une bande de caoutchouc de bourrage sur tringle non vulcanisée (5 - figure 4D) sur la périphérie externe d'un talon annulaire (3) et en direction circonférentielle autour de ce dernier, si bien que l'on obtient un étirage d'une portion externe périphérique de la bande de caoutchouc de bourrage sur tringle non vulcanisée (5 - figure 4D) qui s'étend sur ou qui parcourt une distance supérieure à la portion interne périphérique de la bande de caoutchouc de bourrage sur tringle non vulcanisée (5 - figure 4D) autour du talon annulaire (3), le talon annulaire (3) comprenant un certain nombre de câblés métalliques encapsulés dans du caoutchouc non vulcanisé ;
dans lequel la composition de caoutchouc de la bande de caoutchouc de bourrage sur tringle non vulcanisée (5 - figure 4D) comprend :
(A) au moins un élastomère à base diénique comprenant au moins un caoutchouc choisi parmi un caoutchouc de 1,4-cis-polyisoprène, un caoutchouc de polybutadiène et un caoutchouc de styrène/butadiène;
(B) de 3 à 7 parties en poids du 1,2-polybutadiène syndiotactique par 100 parties en poids du/des élastomère(s) ; dans lequel le 1,2-polybutadiène syndiotactique possède un point de fusion (MP) dans la plage de 70 °C à 130 °C et est inférieur à concurrence d'au moins 10 °C à la température de malaxage maximale pour la préparation de la composition de caoutchouc non vulcanisée vulcanisable au soufre ; et
(C) de 30 à 120 phr d'une matière de charge pour le renforcement, comprenant :
(1) un noir de carbone ; ou
(2) une combinaison d'un noir de carbone et de silice conjointement avec un agent de couplage pour la silice possédant une fraction apte à réagir avec des groupes hydroxyle sur la silice et une autre fraction différente qui entre en interaction avec ledit/lesdits élastomère(s) à base diénique.

2. Procédé selon la revendication 1, dans lequel une portion périphérique externe de la bande de caoutchouc de bourrage sur tringle non vulcanisée (5 - figure 4D) est soumise à un étirage au-delà de sa longueur extrudée initiale et au-delà de la longueur d'une portion interne en direction radiale de la bande de caoutchouc de bourrage sur tringle non vulcanisée (5 - figure 4D) adjacente au talon annulaire (3).

3. Procédé selon au moins une des revendications précédentes, dans lequel la matière de charge pour le renforcement représente un noir de carbone pour le renforcement du caoutchouc.

4. Procédé selon au moins une des revendications précédentes, dans lequel la matière de charge pour le renforcement représente une combinaison d'un noir de carbone pour le renforcement du caoutchouc et de silice ou de silice précipitée, conjointement avec un agent de couplage pour la silice comprenant un bis (3-triéthoxysilylpropyl) polysulfure contenant une moyenne de 2 à 4 atomes de soufre de liaison dans son pont polysulfure ou un alcoxyorganomercaptosilane.

5. Procédé selon au moins une des revendications précédentes, dans lequel les élastomères à base diénique comprennent du 1,4-cis-polyisoprène et au moins un caoutchouc choisi parmi un caoutchouc de styrène/butadiène et un caoutchouc de polybutadiène.

6. Procédé selon au moins une des revendications précédentes, comprenant en outre la vulcanisation au soufre de l'assemblage bourrage sur tringle/talon contenant la bande circonférentielle de caoutchouc de bourrage sur tringle.

7. Procédé de confection d'un bandage pneumatique, le procédé comprenant la confection d'un assemblage de bandage pneumatique non vulcanisé contenant l'assemblage préformé non vulcanisé bourrage sur tringle/talon qui a été préparé sous la forme d'un talon déjà muni d'un bourrage sur tringle conformément à au moins une des revendications 1 à 5, le bourrage sur tringle en caoutchouc s'étendant en direction radiale à l'extérieur du talon du bandage pneumatique jusque dans un flanc de bandage pneumatique associé.

8. Procédé selon la revendication 7, comprenant en outre la vulcanisation au soufre du bandage pneumatique.

9. Talon annulaire de bandage pneumatique déjà muni d'un bourrage sur tringle comprenant un talon annulaire de bandage pneumatique (3) comprenant des câblés métalliques encapsulés dans du caoutchouc non vulcanisé ; dans lequel le talon (3) contient un bourrage sur tringle en caoutchouc non vulcanisé (5 - figure 4D) disposé en direction circonférentielle autour du talon annulaire (3) et sur la périphérie externe de ce dernier ; dans lequel la portion externe en direction radiale du bourrage sur tringle en caoutchouc non vulcanisé (5 - figure 4D) sur le talon annulaire (3) possède une longueur qui s'étend au-delà de la longueur de sa portion interne en direction radiale ; et dans lequel la composition du bourrage sur tringle en caoutchouc comprend :
(A) au moins un élastomère à base diénique comprenant au moins un caoutchouc choisi parmi un caoutchouc de 1,4-cis-polyisoprène, un caoutchouc de polybutadiène et un caoutchouc de styrène/butadiène;
(B) de 3 à 7 parties en poids du 1,2-polybutadiène syndiotactique par 100 parties en poids du/des élastomère(s) ; dans lequel le 1,2-polybutadiène syndiotactique possède un point de fusion (MP) dans la plage de 70 °C à 130 °C ; et
(C) de 30 à 120 phr d'une matière de charge pour le renforcement, comprenant :
(1) un noir de carbone ; ou
(2) une combinaison d'un noir de carbone et d'une silice conjointement avec un agent de couplage pour la silice possédant une fraction apte à réagir avec des groupes hydroxyle sur la silice et une autre fraction différente qui entre en interaction avec ledit/lesdits élastomère(s) à base diénique.

10. Talon de bandage pneumatique déjà muni d'un bourrage sur tringle selon la revendication 9, dans lequel la matière de charge pour le renforcement représente un noir de carbone pour le renforcement du caoutchouc ; ou dans lequel la matière de charge pour le renforcement représente une combinaison d'un noir de carbone pour le renforcement du caoutchouc et de silice précipitée, conjointement avec un agent de couplage pour la silice précipitée comprenant un bis (3-triéthoxysilylpropyl) polysulfure contenant une moyenne de 2 à 4 atomes de soufre de liaison dans son pont polysulfure ou un alcoxyorganomercaptosilane.

11. Talon de bandage pneumatique déjà muni d'un bourrage sur tringle selon l'une quelconque des revendications 9 à 10, sous la forme d'un talon de bandage pneumatique déjà muni d'un bourrage sur tringle, vulcanisé au soufre.

12. Bandage pneumatique comprenant le talon de bandage pneumatique déjà muni d'un bourrage sur tringle selon au moins une des revendications 9 à 11, dans lequel le bourrage sur tringle (5 - figure 4D) s'étend en direction radiale à l'extérieur du talon de bandage pneumatique (3) jusque dans un flanc de bandage pneumatique associé.
